# EUROPÄISCHE PATENTSCHRIFT

(11) **EP 0 590 102 B1**
(45) Veröffentlichungstag und Bekanntmachung des Hinweises auf die Patenterteilung: **02.05.1997**
(21) Anmeldenummer: 93901020.3
(22) Anmeldetag: 16.06.1992
(51) Int. Cl.: F04C 15/04, F16K 17/04

(54) **STROMREGELVENTIL**
FLOW REGULATOR VALVE
SOUPAPE REGULATRICE DE DEBIT

(30) Priorität: 20.06.1991 DE 4120360
(43) Veröffentlichungstag der Anmeldung: 06.04.1994
(73) Patentinhaber: ZF FRIEDRICHSHAFEN Aktiengesellschaft, 88038 Friedrichshafen (DE)
(72) Erfinder: SEIDL, Günther, D-7072 Heubach (DE)
(86) Internationale Anmeldenummer: EP9201358
(87) Internationale Veröffentlichungsnummer: WO9300514

(56) Entgegenhaltungen:
- US-A- 2 395 824
- US-A- 3 656 870

## Beschreibung

Die Erfindung betrifft ein Stromregelventil, insbesondere für Verdrängerpumpen für Hilfskraftlenkungen von Kraftfahrzeugen, nach dem Oberbegriff des Anspruches 1. Dabei ist in einer Ventilbohrung ein Stromregelkolben dichtend geführt. Innerhalb des Stromregelkolbens ist ein Druckbegrenzungsventil angeordnet, dessen Schließkörper durch die Kraft einer Feder gegen einen Ventilsitz gedrückt wird. Die Kraft der Feder ist durch eine Einstellschraube einstellbar.

Ein derartiges Ventil ist bekannt aus der US-A-33 66 065. Bei diesem Stromregelventil wird die Kraft der Feder und damit der Öffnungsdruck des Stromregelventils durch eine Einstellschraube eingestellt. Der Einstellwert der Federkraft wird dabei durch Scheiben festgelegt, die zwischen einem Bund der Einstellschraube und einer Stirnfläche des Stromregelkolbens eingelegt werden. Um die Einstellschraube gegen Herausdrehen zu sichern, muß die Einstellschraube mit einem bestimmten Drehmoment angezogen werden. Das erforderliche Drehmoment ist dabei so hoch, daß der Stromregelkolben verformt wird. Durch diese Verformungen der Außenumfangsfläche des Stromregelkolbens kann der Stromregelkolben in der Ventilbohrung klemmen. Um ein solches Klemmen zu verhindern, muß zwischen der Ventilbohrung und dem Stromregelkolben ein relativ großes Mindestspiel bestehen. Dieses große Spiel führt zu einem hohen Leckölverlust zwischen dem Stromregelkolben und der Ventilbohrung und verringert damit den hydraulischen Wirkungsgrad der Pumpe. Durch den hohen Leckölanteil tritt außerdem eine relativ große Hysterese bei der Förderstrom-Kennlinie auf.

Der Erfindung liegt die Aufgabe zugrunde, ein Stromregelventil zu schaffen, bei dem die genannten Nachteile vermieden werden. Insbesondere soll sich bei der Einstellung des Stromregelventils der Stromregelkolben nicht verformen.

Diese Aufgabe wird durch das im Anspruch 1 gekennzeichnete Stromregelventil gelöst. Zur Lösung ist insbesondere die Einstellschraube als Gewindestift ausgebildet, der in seiner eingestellten Stellung durch eine Kontermutter gegenüber dem Stromregelkolben gesichert ist.

Wird bei einem erfindungsgemäßen Stromregelventil die Kontermutter mit einem Drehmoment angezogen, das in seiner Größe dem Drehmoment bei der Einstellung des bekannten Stromregelventils entspricht, so verteilt sich die Verformung je nach den Abmessungen von Stromregelkolben und Kontermutter auf diese beiden Teile. Der Stromregelkolben wird dadurch wesentlich weniger verformt, so daß ein wesentlich kleineres Mindestspiel zwischen dem Stromregelkolben und der Ventilbohrung notwendig ist.

Besonders vorteilhaft ist es dabei, wenn die Kontermutter einen kleineren Querschnitt aufweist als der Stromregelkolben in dem Bereich, in dem der Gewindestift eingeschraubt ist. Dadurch ist es möglich, daß die auftretende Verformung bei der Fixierung der Einstellschraube vollständig von der Kontermutter aufgenommen wird. Als weiterer Vorteil ergibt sich, daß der Öffnungsdruck des Druckbegrenzungsventils stufenlos eingestellt werden kann. Dies wird dadurch möglich, daß die Einstellscheiben zwischen der Einstellschraube und dem Stromregelkolben entfallen.

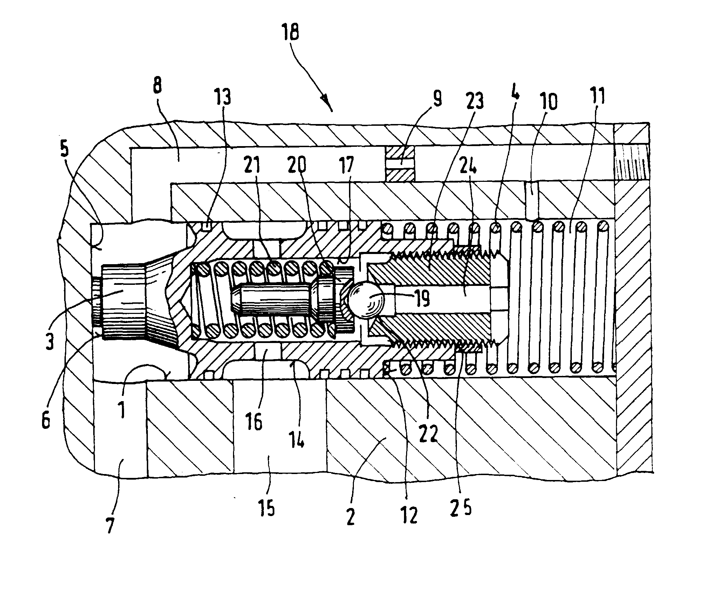

Im folgenden wird die Erfindung anhand eines in der Zeichnung dargestellten Ausführungsbeispieles näher erläutert. Die Zeichnung zeigt einen Längsschnitt durch das erfindungsgemäße Stromregelventil.

In einer Ventilbohrung 1 eines Ventilgehäuses 2 ist ein Stromregelkolben 3 axial verschiebbar dichtend geführt. Der Stromregelkolben 3 wird durch eine Feder 4 in der Zeichnung nach links gegen einen Gehäuseanschlag 5 gedrückt. Die linke Stirnfläche 6 des Stromregelkolbens 3 wird mit dem Druck aus einer Druckleitung 7 beaufschlagt. Von der Druckleitung 7 führt eine Arbeitsleitung 8 zu einem nicht dargestellten Verbraucher. In der Arbeitsleitung 8 ist eine Stromregeldrossel 9 angeordnet. Der Druck, der hinter der Stromregeldrossel 9 herrscht, wird über eine Dämpfungsdrossel 10, einem Raum 11 zugeführt, der die Feder 4 enthält und von der rechten Stirnfläche 12 des Stromregelkolbens 3 begrenzt ist.

Der Stromregelkolben 3 weist an seiner äußeren Umfangsfläche mehrere Dichtrillen 13 auf. Eine Umfangsnut 14 des Stromregelkolbens 3 steht mit einer Rücklaufleitung 15 in Verbindung. Von der Umfangsnut 14 führen Bohrungen 16 zu einer im Inneren des Stromregelkolbens 3 befindlichen Axialbohrung 17.

In der Axialbohrung 17 ist ein Druckbegrenzungsventil 18 angeordnet. Ein Schließkörper 19 des Druckbegrenzungsventils ist in dem Ausführungsbeispiel als Kugel ausgebildet. Der Schließkörper 19 wird über einen Kugelhalter 20 durch eine Feder 21 gegen einen Ventilsitz 22 gedrückt. Der Ventilsitz 22 ist an einem Gewindestift 23 angeordnet, der als Einstellschraube für das Druckbegrenzungsventil 18 dient. Von dem Ventilsitz 22 führt eine Bohrung 24 zu dem Raum 11.

Der Gewindestift 23 ist gegenüber dem Stromregelkolben 3 durch eine Kontermutter 25 gesichert.

Die Kontermutter 25 ist beispielsweise eine Sechskantmutter, deren kleinster Querschnitt in der Zeichnung dargestellt ist. Dadurch ergibt sich insgesamt ein Querschnitt der Kontermutter 25, der kleiner ist als der Querschnitt des Stromregelkolbens 3 in dem Bereich, in dem der Gewindestift 23 eingeschraubt ist. Dadurch wird die ganze Verformung, die bei der Fixierung des Gewindestiftes 23 entsteht, von der Kontermutter 25 aufgenommen.

Bei dem erfindungsgemäßen Stromregelventil ist eine stufenlose Druckeinstellung des integrierten Druckbegrenzungsventiles sehr leicht möglich, da der Gewindestift 23 in jeder beliebigen Stellung durch die Kontermutter 25 fixiert werden kann. Ein zusätzlicher Vorteil ergibt sich durch die Möglichkeit, das Druckbegrenzungsventil auf einem Montageprüfstand vollautomatisch auf den gewünschten Druck einzustellen. Damit ist eine sehr enge Tolerierung des Öffnungsdruckes des Druckbegrenzungsventils möglich.

### Bezugszeichen

- 1: Ventilbohrung
- 2: Ventilgehäuse
- 3: Stromregelkolben
- 4: Feder
- 5: Gehäuseanschlag
- 6: Stirnfläche
- 7: Druckleitung
- 8: Arbeitsleitung
- 9: Stromregeldrossel
- 10: Dämpfungsdrossel
- 11: Raum
- 12: Stirnfläche
- 13: Dichtrille
- 14: Umfangsnut
- 15: Rücklaufleitung
- 16: Bohrung
- 17: Axialbohrung
- 18: Druckbegrenzungsventil
- 19: Schließkörper
- 20: Kugelhalter
- 21: Feder
- 22: Ventilsitz
- 23: Gewindestift
- 24: Bohrung
- 25: Kontermutter

## Patentansprüche

1. Stromregelventil, insbesondere für Verdrängerpumpen für Hilfskraftlenkungen von Kraftfahrzeugen, mit einem in einer Ventilbohrung (1) axial verschiebbaren, dichtend geführten Stromregelkolben (3) und mit einem innerhalb des Stromregelkolbens (3) angeordneten Druckbegrenzungsventil (18), dessen Schließkörper (19) durch die Kraft einer Feder (21) gegen einen Ventilsitz (22) gedrückt wird, wobei die Kraft der Feder (21) durch eine Einstellschraube einstellbar ist, dadurch **gekennzeichnet**, daß die Einstellschraube als Gewindestift (23) ausgebildet ist, der in seiner eingestellten Stellung durch eine Kontermutter (25) gegenüber dem Stromregelkolben (3) gesichert ist.

2. Stromregelventil nach Anspruch 1, dadurch **gekennzeichnet**, daß die Kontermutter (25) einen kleineren Querschnitt aufweist als der Stromregelkolben (3) in dem Bereich, in dem der Gewindestift (23) eingeschraubt ist.

## Claims

1. A flow control valve, more particularly for displacement pumps for power-assisted steering systems of motor vehicles, with a flow control piston (3), which is guided in a sealing-tight manner so as to be axially displaceable in a valve bore (1), and with a pressure limiting valve (18), which is arranged inside the flow control piston (3) and whose closing element (19) is pressed by the force of a spring (21) against a valve seat (22), the force of the spring (21) being adjustable by means of an adjusting screw, characterised in that the adjusting screw is constructed as a threaded rod (23), which is secured in its adjusted position relative to the flow control piston (3) by a counter nut (25).

2. A flow control valve according to claim 1, characterised in that the counter (25) has a smaller cross section than the flow control piston (3) in the region in which the threaded rod (23) is screwed in.

## Revendications

1. Soupape de régulation de flux, en particulier pour pompe de refoulement pour une direction assistée de véhicule automobile, comportant un piston de régulation du flux (3) coulissant de façon étanche, disposé dans un alésage (1) de la soupape et mobile axialement, ainsi qu'une soupape de limitation de la pression (18) logée à l'intérieur du piston de régulation du flux (3), dont l'organe de fermeture (19) est sollicité contre un siège de soupape (22) par la force d'un ressort (21), cette force exercée par le ressort (21) étant réglable au moyen d'une vis de réglage, **caractérisée en ce** que la vis de réglage est constituée d'une goupille filetée (23) qui est sécurisée dans sa position engagée, par rapport au piston de régulation du flux (3) par un contre-écrou (25).

2. Soupape de régulation de flux selon la revendication 1, **caractérisée en ce que** le contre-écrou (25) présente une section inférieure à celle du piston de régulation du flux (3) dans la zone dans laquelle la goupille filetée (23) est vissée.
